# EUROPEAN PATENT APPLICATION

(11) **EP 1 780 329 A1**
(43) Date of publication of application: **02.05.2007**
(21) Application number: 05110056.8
(22) Date of filing: 27.10.2005
(51) Int. Cl.: D06Q 1/00, G09F 21/02

(54) **Multilayer emblem**

(71) Applicant: Polygraphic Holding B.V., 3433 PE Nieuwegein (NL)
(72) Inventor: Sijmons, Johan, Marcel, 1187 JH, Amstelveen (NL)
(74) Representative: Beetz, Tom

(57) **Abstract**

The invention pertains to a multilayer emblem comprising an adhesive layer, superposed by an ink-containing layer, and optionally superposed by a coating layer, characterized in that between the adhesive layer and the ink-containing layer an antibleed layer is provided wherein said antibleed layer comprises a polymeric binding agent and an inorganic absorption agent. These emblems are very effective in preventing textile dyes to bleed into the emblem ink layer.

## Description

The invention relates to a multilayer emblem, to a substrate provided with the emblem thereon, to a method for producing a composition for use in said emblem, and to textile goods provided with said emblem.

Emblems are widely used as identification means on textile, for instance company logos are typically provided onto garment used in said company. Emblems are also used for decorative purposes onto textile such as work ware, t-shirts and the like. Emblems, patches, labels, and the like are also used as textile identification products for laundry identification, and the like. In this regard they are often sewn or sealed onto articles of wearing apparel or other fabric material of a general nature (herein further abbreviated as "textile"). In US 4,981,742 the problem was addressed of the transference of dyestuffs from the emblem yarns and fabrics used to make the patches, emblems, etc., to the garments which is usually noticed when the identification products are removed from the garments. When the emblem is adhered to the garment by application of heat and pressure, the dyestuffs that are used to color the fabric of the emblem and/or the yarn of the embroidery portion of the emblem bleeds through even the thermoplastic adhesive backing onto the garment. This problem was solved by using a dye-impermeable material bonded to a fabric layer of the emblem. Such thermoplastic layer was made of PETG which is a glycol-modified polyethylene terephthalate polymer. This layer prevents textile dyes from the emblem to bleed through the adhesive layer into the fabric. However, when non-fabric emblems are used another problem occurs, i.e. bleeding of textile dyes through the adhesive layer into the ink-containing layer of the emblem. This means, for instance, that a white logo provided on red-dyed textile, after some time, especially after laundry washing, may turn into a reddish logo. It is an objective of this invention to provide a solution to this problem.

To this end the invention provides a multilayer emblem comprising an adhesive layer, superposed by an ink-containing layer, and optionally superposed by a coating layer, characterized in that between the adhesive layer and the ink-containing layer an antibleed layer is provided wherein said antibleed layer comprises a polymeric binding agent and an inorganic absorption agent.

It was found that anti-bleeding layers comprising inorganic absorption agents are very effective in preventing textile dyes to bleed into the emblem ink layer. Suitable inorganic absorption agents are those compounds which are known to be effective in absorbing other compounds. Examples of such agents are clays such as bentonite, zeolites, and most preferably, active carbon. The agents, which are solid particles, should not be too coarse, and usually particle size between 1 and 100 µm can be used. More preferred particle sizes are between 5 and 50 µm, most preferred between 15 and 25 µm. Ranges for inorganic absorption agents are 2 to 25 wt.% of the composition, preferably 5 to 20 wt.%, and more preferably 8 to 15 wt.%.

These agents, however, were found not to be effective when used as such. They appear to be appropriate only when dispersed in an organic binder. Suitable organic binders should be elastic and not form canals and holes through which ink dyes can still migrate. Any polymer satisfying these conditions can suitably be used. Preferred polymers are polyurethanes, most preferably those that are water-soluble. Suitable binders are poly(methyl methacrylate) latex, copolyester latex of terephthalic acid, isophthalic acid, sulfo-isophthalic acid and ethylene glycol, vinylidene chloride, methyl methacrylate, itaconic acid terpolymer, copolymer of ethyl acrylate and methacrylic acid, copolymer of methyl methacrylate, butadiene and itaconic acid, poly(ethyl acrylate), latex of a copolymer of acrylic acid and ethyl acrylate, acrylate-based aqueous latex such as Permutex®, acrylate copolymer aqueous latex, acrylic acid/styrene copolymer latex, non-crosslinked methacrylate acid/ethyl acrylate copolymer latex, aqueous polyacrylate latex, carboxylated polypropylene, and the like. The composition comprises 40 to 98 wt.% binder, preferably 50 to 90 wt.%, more preferably 70 to 85 wt.%.

Due to the selection of absorption agents and binders, a layer can be obtained that is not perfectly impermeable to the textile dyes. In many cases small holes and canals can be formed due to foaming. It was found that this could effectively be prevented by adding an antifoam agent. These agents prevent formation of air bubbles and lead to a perfectly dye-impermeable (polyurethane) layer. Antifoam agents are known in the art, and suitable defoamers include both silicone and non-silicone defoamers. Defoamers are commercially available, for instance Agitan®, which is a blend of mainly liquid hydrocarbons or white oils, non-ionic emulsifiers and hydrophobic silica. If present suitable amounts of defoamer in the composition are 0.2 to 7 wt.%, preferably 0.5 to 5 wt.%, more preferably 1 to 2 wt.%.

If necessary, rheology modifiers can be added as thickening agent. Suitable thickening agent are, for instance, the esters of acrylic or alkacrylic acids, copolymers and emulsion polymers which are commercially available and sold under trade names, such as Plextol®, Rhoplex®, Methacrol®, Acronal®, Igeplast®), Plexigum®, Acrysol®, Bedafin® CM. Polyurethane resins, more particularly hydrophobically modified ethyleneoxide urethane, such as Acrysol are preferred. If present suitable amounts of rheology modifier in the composition are 1 to 20 wt.%, preferably 3 to 15 wt.%, more preferably 6 to 12 wt.%.

The components of the antibleed layer are dissolved in a solvent. This can be an organic solvent such as alcohol, but preferably the solvent is water. In the preferred compositions the amount of water is from 2 to 25 wt.%, preferably 5 to 15 wt.%.

The above mentioned components are used as constituents of the composition for making the antibleed layer. These layers are made by methods wherein a polymeric binding agent, an inorganic absorption agent, if present a rheology modifier and an antifoam agent are mixed in a solvent to obtain a homogeneous mixture, and are then comminuted to obtain a dispersion that is suitable for a screen printing process or an offset printing process.

According to a preferred embodiment the method comprises mixing the rheology modifier with water as the solvent to a homogeneous mixture, adding said mixture to the polymeric binding agent and mixing until homogeneous, adding the antifoam agent and mixing to a homogeneous mixture, followed by adding active carbon, and milling the mixture to obtain the dispersion.

If required other additives such as bleaching agents (such as hydrogen peroxide) may be used.

The comminuting step is preferred to obtain a fine dispersion that is directly suitable for use in screen printing process. Such comminuting step can easily be performed using a triple roller mill, a colloid mill, a pearl mill, and the like. This antibleed composition can then be screen printed to a patterned layer according to methods known in the art, for instance using an apparatus for inking or printing on the surface of an item, such as a badge or emblem. The apparatus for producing the patterns may include a laser, mirrors for moving the beam in the x and y directions, and optics for focusing the beam on the blank screen material. The inking station may include an ink tray, reciprocating squeegees and blades for wiping ink from the leading edges of the squeegee after the squeegee has passed over the pattern.

The emblem of the invention is commonly made on a substrate and sold as such. The substrate having the ink-containing layer closer to the substrate than the adhesive layer is then pressed and/or heated with its adhesive layer onto the textile. If the adhesive layer contains an overlaying protective layer, this protective layer should be removed prior to heating and/or pressing. After the heating/pressing step the emblem is secured to the textile and the substrate can be removed to obtain the textile provided with the emblem.

The substrate may be any suitable substrate, for instance paper or plastic, which may be transparent or not, The substrate such as a transfer paper or plastic sheet, from mold release paper or synthetic resin film, is peelable upon transfer without forming a cutting line by using a blanking die. The transfer paper or plastic may comprise one or more of a base sheet built up by the successive formations of a synthetic resin film, a mold release agent coated layer, a gloss-imparting agent coated layer and a print optimizing agent coated layer. The emblem-shaped part formed on the surface of substrate is built up to desired patterns by the successive formations of the layers, including the printing ink layer, the adhesive layer and optionally a pressure-sensitive adhesive layer.

The invention is further illustrated by the following examples.

### Example 1

### Antibleed composition

9 g of Acrysol® RM-8 (ex Rohm and Haas) were hand mixed in 90 g of water to obtain a thick homogeneous mass. This mass was added to 770 g of binder Permutex® RU-4025 (ex Stahl Permutan Division) and mixed to a homogenous mass. 15 g of Agitan® 232 (ex Münzing Chemie) were added and the mixture was again made homogeneous by hand or machine mixing. To this base material 16 g of active carbon (type 4025, ex Norit, Netherlands) were slowly added and thoroughly mixed so to prevent heat formation. The mixture obtained was milled with a triple roller mill to obtain a dispersion that could be directly used in screen printing machines.

### Example 2

### Comparison of emblem according to the invention and emblem according to prior art

An emblem according to the prior art (A) was made according to the following procedure:
Three layers of a white polyurethane ink (200 g of UR 2549 clear pn 3091, ex Visprox, Netherlands rolled with 100 g of white pigment TR52, ex Hunstman, England) were printed onto a waxed release paper (T100, ex Sericol, England) using a 77T gauze. There onto two layers of a thermoplastic adhesive (Texylon stick 59.865, ex Manoukian, Italy) were printed to obtain an emblem.
This procedure was repeated for making an emblem according to the invention (B), with the proviso that after applying the ink layers and prior to applying the adhesive layers, two antibleed layers were applied containing the composition of example 1 by printing using a 77T gauze.
Both emblems had a perfect white appearance and were dried and cured during 48 hours. The emblems were sealed to the same textile at 180° C during 20 sec. The textile was a 96% polyester/4% elasthan test lap dyed with a red dye (Vipro sublistar idra red In 36732, ex Visprox, Netherlands), which had been sublimed at 220° C during 1.5 min at 1.5 kg/cm pressure. The test lap was visually inspected. Emblem A had turned rose, whereas emblem B was still unchanged. The test lap was thereafter laundry washed for 5 times at 60° C and checked visually again. Emblem A was red colored, whereas emblem B was still unchanged with respect to the untreated emblem.

## Claims

1. A multilayer emblem comprising an adhesive layer, superposed by an ink-containing layer, and optionally superposed by a coating layer, **characterized in that** between the adhesive layer and the ink-containing layer an antibleed layer is provided wherein said antibleed layer comprises a polymeric binding agent and an inorganic absorption agent.

2. The multilayer emblem of claim 1 wherein the antibleed layer further comprises a rheology modifier, and/or an antifoam agent.

3. The multilayer emblem of claim 1 or 2 wherein the inorganic absorption agent is active carbon.

4. The multilayer emblem of any one of claims 1 to 3 wherein the polymeric binding agent is a water-soluble polymer, preferably polyurethane.

5. The multilayer emblem of any one of claims 1 to 4 wherein the rheology modifier is an (meth)acrylic polymer.

6. The multilayer emblem of any one of claims 1 to 5 wherein the adhesive layer is provided with a protective layer.

7. A substrate with the multilayer emblem of any one of claims 1 to 6 superposed thereon, having the ink-containing layer closer to the substrate than the adhesive layer.

8. A method for producing a composition for an antibleed layer, **characterized in that** a polymeric binding agent, an inorganic absorption agent, if present a rheology modifier and an antifoam agent are mixed in a solvent to a homogeneous mixture, and are comminuted to obtain a dispersion that is suitable for a screen printing process.

9. The method according to claim 8 comprising mixing the rheology modifier with water as the solvent to a homogeneous mixture, adding said mixture to the polymeric binding agent and mixing until homogeneous, adding the antifoam agent and mixing to a homogeneous mixture, followed by adding active carbon, and milling the mixture to obtain the dispersion.

10. Textile provided with the emblem of any one of claims 1 to 6, wherein the adhesive layer is adhered to the textile.
